# EUROPEAN PATENT APPLICATION

(11) **EP 4 406 995 A1**
(43) Date of publication of application: **31.07.2024**
(21) Application number: 23153125.2
(22) Date of filing: 24.01.2023
(51) Int. Cl.: C08J 9/00, C08J 9/10

(54) **ONE-COMPONENT EXPANDABLE THERMOSETTING EPOXY COMPOSITION WITH REDUCED VOC EMISSION**

(71) Applicant: Sika Technology AG, 6340 Baar (CH)
(72) Inventor: CASPARI, Philip Horst, 8048 Zürich (CH); MUNZINGER, Noah, 8047 Zürich (CH)
(74) Representative: Sika Patent Attorneys

(57) **Abstract**

The present invention relates to a one-component thermosetting epoxy resin composition, comprising an epoxy resin **A** having on average more than one epoxide group per molecule, a latent hardener for epoxy resins a physical or chemical blowing agent **BA** and at least one copolymer **CP** comprising ethylene monomer residues and residues of a first comonomer having one or more functionalities selected from the group consisting of carboxylic acid and salts thereof, carboxylic acid anhydride and epoxide. The epoxy resin adhesive is notable for low VOC content after full curing, especially around 200°C for 30 min.

## Description

### Technical field

The present invention pertains to the field of thermally expandable one-component thermosetting epoxy resin composition, in particular for the production of structural foams and a reinforcing element for hollow structures which comprise such a thermally expandable composition, a method for producing such reinforcing elements, their use for reinforcing a hollow structure and a method for reinforcing a hollow structure.

### Prior art

An important area of application of thermally expandable, thermosetting epoxy resin adhesives is found in vehicle construction, especially when foaming cavities in the body-in-white.

Manufactured products often contain openings and cavities or other hollow parts that result from the manufacturing process and / or are designed for other reasons such as weight reduction. Motor vehicles, for example, comprise several such openings and cavities in the entire vehicle, for example in the vehicle pillars.

It is often desirable to reinforce such openings and cavities with reinforcement elements built into the opening or cavity to reinforce the hollow structure of the manufactured product, for example a vehicle pillar, so that it becomes more resistant to mechanical stress, but with the advantage maintains the low weight of the hollow structure.

Such elements, which are used for the reinforcement, often consist of a carrier made of plastic, metal or another rigid material and one or more layers of an epoxy resin additive attached to it, in particular by injection molding are able to expand their volume when heat or some other physical or chemical form of energy is introduced. Such components can also consist entirely of expandable material. Using an appropriate construction, it is possible to insert the reinforcement element into the cavity of the structure to be reinforced during the manufacturing process, but at the same time to make the inner walls and / or the cavities of the structure to be reinforced accessible to liquids. For example, during the manufacturing process of a vehicle, the hollow parts of a metal frame can still be largely covered by an electro-coating liquid while the reinforcement elements are already in place. During a subsequent heat treatment step, the epoxy resin composition expands and the reinforcing element fills, or reinforces, the cavities.

Thermally expandable epoxy resin compositions currently used often consist of solid epoxy resins. These compositions also contain blowing agents. The activation of the epoxy resin takes place under activation conditions, such as elevated temperature, while at the same time the blowing agent decomposes and releases gases such as nitrogen or carbon monoxide or physically expands. This leads to the volume expansion mentioned above and the formation of a stable foam which ideally fills the cavity as intended and adheres to its walls.

Such thermally expandable epoxy resin compositions currently contain dispersion aids or homogenizers, sometimes described as wetting agents or surface-active agents, to facilitate a homogeneously mixed composition.

For example, the document US 11447599 describes a material suitable for reinforcing vehicles in the transportation industry. The document discloses materials containing an epoxy resin, a curing agent, a blowing agent as well as an ethylene homopolymer wax as a processing aid.

Since thermally expandable epoxy resin compositions are cured at high temperatures, typically around 175°C, a drawback of said curing temperatures is that a considerable amount of components can be emitted from the cured material. This can be traced down via solid content measurements, VOC measurements or fogging experiments.

It is thus desirable to obtain a thermally expandable composition that does not suffer from this limitation and exhibits good material properties after curing, especially good adhesion on substrates, especially metal substrates.

### Summary of the invention

It is an object of the present invention, therefore, to provide a thermally expandable epoxy resin composition that provides low VOC content and exhibits good material properties after full curing, especially around 200°C for 30 min, and good adhesion on substrates, especially metal substrates.

Surprisingly it has been found that this object can be achieved by the one-component thermosetting epoxy composition as defined in claim 1. In addition, these one-component thermosetting epoxy compositions showed good mechanical properties and good adhesion on metallic substrates.

Surprisingly it has been found that while providing improved processability, the addition of ethylene homopolymer wax as a processing aid contributed to a considerable amount VOC content emitted from the cured material. Even more surprisingly, it was found that the replacement with at least one copolymer **CP** as mentioned below strongly reduces this increase of VOC and FOG emission, in some cases even below the values of compositions that do not contain any processing aids.

Further aspects of the invention are subjects of further independent claims. Particularly preferred embodiments of the invention are subjects of the dependent claims.

### Certain embodiments of the invention

The present invention therefore relates to a one-component thermosetting epoxy resin composition, comprising
a) at least one epoxy resin **A** having on average more than one epoxide group per molecule;
b) at least one latent hardener for epoxy resins; and
c) at least one physical or chemical blowing agent **BA**; and
d) at least one copolymer **CP** comprising ethylene monomer residues and residues of a first comonomer having one or more functionalities selected from the group consisting of carboxylic acid and salts thereof, carboxylic acid anhydride and epoxide, wherein the at least one copolymer **CP** is contained in an amount from 1-10 wt-%, preferably 2 - 5 wt-%, more preferably 2.5 - 4 wt-%, based on the total weight of the one-component thermosetting epoxy resin composition.

The epoxy resin composition is one-component, meaning that the constituents of the epoxy resin composition, more particularly the epoxy resin and the hardener, are present in one component, without curing taking place at usual ambient temperature or room temperature. It can therefore be handled in this form, whereas with two-component systems the components cannot be mixed until immediately prior to use.

The curing of the one-component epoxy resin composition is accomplished by heating, typically at a temperature of more than 70°C, as in the range from 100 to 220°C, for example.

The prefix "poly" in expressions such as polyol or polyisocyanate denotes that the compound has two or more of the stated groups. A polyisocyanate, for example, is a compound having two or more isocyanate groups.

The expression "independently of one another" as used below means that in the same molecule, two or more identically denoted substituents may have identical or different meanings in accordance with the definition.

The dashed lines in the formulae in this document represent in each case the bond between the substituent in question and the associated remainder of the molecule.

Room temperature refers here to a temperature of 23°C, unless otherwise indicated.

The thermosetting one-component epoxy resin composition comprises at least one epoxy resin **A** having on average more than one epoxide group per molecule. The epoxide group is preferably in the form of a glycidyl ether group.

The fraction of the epoxy resin **A** having on average more than one epoxide group per molecule is preferably from 30 - 90 wt%, 35 - 85 wt%, 40 -75 wt%, more preferably 45 - 60 wt%, based on the total weight of the one-component thermosetting epoxy resin composition.

The epoxy resin **A** having on average more than one epoxide group per molecule is preferably a liquid epoxy resin or a solid epoxy resin, more preferably a solid epoxy resin. The term "solid epoxy resin" is very familiar to the person skilled in the epoxide art and is used in contrast to "liquid epoxy resins". The glass transition temperature of solid resins is above room temperature, meaning that at room temperature they can be comminuted into pourable powders. It is preferred if more than 70 wt.-%, more preferred more than 80 wt.-%, more than 90 wt.-%, more than 95 wt.-%, more than 98 wt.-%, of the epoxy resin **A** is a solid epoxy resin.

Preferred epoxy resins have the formula (I)

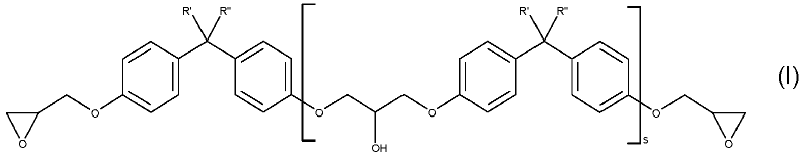

In this formula, the substituents R' and R" independently of one another are either H or CHs.

In solid epoxy resins, the index s has a value of > 1.5, more particularly from 2 to 12.

Solid epoxy resins of this kind are available commercially, for example, from Dow or Huntsman or Hexion.

Compounds of the formula (I) having an index s of 1 to 1.5 are referred to by the person skilled in the art as semi-solid epoxy resins. For the purposes of the present invention, they are considered likewise to be solid resins. Preferred solid epoxy resins, however, are epoxy resins in the narrower sense, in other words where the index s has a value of > 1.5.

In the case of liquid epoxy resins, the index s has a value of less than 1. Preferably s has a value of less than 0.2.

The resins in question are therefore preferably diglycidyl ethers of bisphenol A (DGEBA), of bisphenol F and also of bisphenol A/F. Liquid resins of these kinds are available for example as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Of further suitability as epoxy resin **A** are what are called epoxy novolacs. These compounds have, in particular, the following formula: 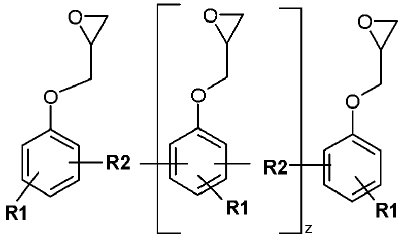 where 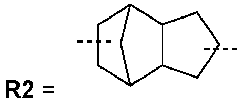 or CH₂, **R1 =** H or methyl and z = 0 to 7.

More particularly these are phenol-epoxy or cresol-epoxy novolacs (**R2** = CH₂).

Epoxy resins of these kinds are available commercially under the tradename EPN or ECN and also Tactix^{®} from Huntsman, or within the product series D.E.N.^{™} from Dow Chemical.

The epoxy resin **A** is preferably a solid epoxy resin of the formula (I).

The thermosetting one-component epoxy resin composition further comprises at least one latent hardener for epoxy resins. Latent hardeners are substantially inert at room temperature and are activated by elevated temperature, typically at temperatures of 70°C or more, thereby initiating the curing reaction. The customary latent hardeners for epoxy resins can be used. Preference is given to a latent epoxy resin hardener containing nitrogen.

The latent hardener is preferably selected from dicyandiamide, guanamines, guanidines, aminoguanidines and derivatives thereof, substituted ureas, imidazoles and amine complexes, preferably dicyandiamide.

The latent hardener is preferably used in a stoichiometric amount based on the epoxy groups in the composition. The molar ratio of the epoxy groups to the active hydrogen of the latent hardener is preferably 0.8 to 1.2, in particular 0.9 to 1.1, preferably 0.95 to 1.05.

The fraction of the latent hardener is preferably 0.1 to 15 wt%, more preferably 0.2 to 5 wt%, more particularly 0.5 - 3 wt%, based on the total weight of the epoxy resin composition.

The one-component thermosetting epoxy resin composition comprises d) at least one copolymer **CP** comprising ethylene monomer residues and residues of a first comonomer having one or more functionality selected from the group consisting of carboxylic acid and salts thereof, carboxylic acid anhydride and epoxide.

It was surprisingly found that polymers that are typically used a processing wax for thermosetting epoxy resin compositions, especially polymers based on ethylene monomer residues without said comonomers, are responsible for a significant increase of VOC and FOG emission. This is shown for example in table 2 in the comparison of Ref.1 with Ref.2 and Ref.3. It was further surprisingly found that the replacement of these polymers with copolymers **CP** a first comonomer having one or more functionality selected from the group consisting of carboxylic acid and salts thereof, carboxylic acid anhydride and epoxide strongly reduces this increase of VOC and FOG emission, in some cases even below the values of compositions, that do not contain any processing waxes. This is shown for example in table 2 in the comparison of Ex.1 - Ex.5 with Ref.1, Ref.2 and Ref.3.

In addition, it was surprisingly found that the copolymers **CP** led to a decrease in expansion at low and high expansion temperatures of 160 °C, respectively 200 °C, even though the expansion behaviour of the standard curing temperature in the automotive industry of around 175 °C was comparable with thermosetting epoxy resin compositions containing processing aids or processing aids purely based on ethylene monomer residues. Such a reduction in expansion is always related to an improvement of the mechanical properties of the cured expanded composition, like tensile strength, modulus and elongation at break. Especially in situations of lower or higher curing temperatures, sometimes due to suboptimal curing conditions due to technical problems during the curing process or specific demands, sufficiently good mechanical properties are hard to meet. Hence a reduction in expansion in especially these temperature ranges is particularly desirable. This is particularly important for high temperatures like 200 °C, where this problem is most prominent.

The one-component thermosetting epoxy resin composition contains the d) at least one copolymer **CP** in an amount from 1 - 10 wt-%, preferably 2 - 5 wt-%, more preferably 2.5 - 4 wt-%, based on the total weight of the one-component thermosetting epoxy resin composition.

An amount of more than 10 wt-% is disadvantageous with respect to the adhesion of the cured thermosetting epoxy resin composition, especially on metal. An amount of less than 1 wt-% is disadvantageous with respect to the improvement of the processing properties of the thermosetting epoxy resin composition.

Preferably, the at least one copolymer **CP** has a melt flow index ("MFI") in the range of from 2 to 20 g / 10 min, preferably from 4 to 10 g / 10 min, as determined according to ASTM D-1238 (2020 Edition, 190°C/2.16 kg).

It is further preferred if the at least one copolymer **CP** has a melting point in the range from 60°C - 120°C, preferably from 85°C - 110°C, as determined according to ISO 11357-3:2018. Temperatures of less than 60°C are disadvantageous with respect to increased tackiness of the uncured thermosetting epoxy resin composition.

Preferably, the ethylene monomer of a copolymer constitutes at least 50 weight percent ("wt %"), more preferably at least 60 wt %, most preferably at least 70 wt %, of the entire α-olefin content of the copolymer **CP.**

The at least one copolymer **CP** comprises residues of a first comonomer having one or more functionalities selected from the group consisting of carboxylic acid and salts thereof, carboxylic acid anhydride and epoxide.

Preferred first comonomers having carboxylic acid functionality are selected from the group consisting of acrylic acid and methacrylic acid, preferably methacrylic acid. Examples of commercially available copolymers are Surlyn 1802 (MA) and Nucrel 3990 (AA).

The first comonomer being methacrylic acid is advantageous with respect to low values for VOC and FOG, especially VOC. It further contributes to higher reduction of expansion at 200 °C. This can be seen for example in the comparison of Ex.2 with Ex.1 and Ex.3.

Preferred first comonomers having carboxylic anhydride functionality have maleic anhydride functionality. An example of a commercially available copolymer is Lotader^{™} 3210, which is an anhydride-functionalized polyethylene (poly(ethylene-co-butyl acrylate-co-maleic anhydride random terpolymer), available from Arkema, Inc.

Preferred first comonomers having epoxide functionality are glycidyl esters of carboxylic acids, preferably esters of acrylic acid or methacrylic acid, more preferably selected from the list consisting of glycidyl acrylate, glycidyl methacrylate and allyl glycidyl ether, most preferred glycidyl methacrylate. An example of a commercially available copolymer is Lotader^{™} AX 8840, which is an epoxy-functionalized polyethylene (poly(ethylene-co-glycidyl methacrylate) random copolymer), available from Arkema, Inc.

A copolymer **CP** comprising a first comonomer having epoxide functionality is advantageous with respect to low values for VOC and FOG. It further contributes to higher reduction of expansion at 160 °C. This can be seen for example in the comparison of Ex.1 with Ex.2 and Ex.3.

This effect is especially prominent if said copolymer **CP** does not comprise an additional comonomer in addition to the first comonomer having one or more functionality selected from the group consisting of carboxylic acid and salts thereof, carboxylic acid anhydride and epoxide. Such additional comonomer are for example the ones mentioned below. Hence it can be especially advantageous if the copolymer **CP** consists of ethylene monomer residues and residues of a first comonomer having one or more functionality selected from the group consisting of carboxylic acid and salts thereof, carboxylic acid anhydride and epoxide. Most preferred, the copolymer **CP** consists of ethylene monomer residues and residues of a first comonomer selected from the group consisting of methacrylic acid and glycidyl methacrylate.

This can be seen for example in the comparison of Ex.1 with Ex.4 and Ex.5 where Ex.1 shows higher expansion reduction at 200 °C and lower VOC values.

Preferably, the copolymer **CP** contains the first comonomer in an amount of 0.5 to 12 wt %, preferably 2 to 10 wt %, based on the total weight of the copolymer **CP.** The amount of the first comonomer can be confirmed via analytical methods known in the art, such as, but not limited to, Fourier transform infrared spectroscopy (FTIR), nuclear magnetic resonance, and differential scanning calorimetry. Preferably, the amount of the first comonomer is determined by Fourier transform infrared spectroscopy (FTIR).

It can also be preferred if the at least one copolymer **CP** comprises additional comonomer residues. Preferably, said comonomer residue is selected from the group consisting of unsaturated esters and acetates, more preferably selected from methyl acrylate, ethyl acrylate, butyl acrylate, and vinyl acetate, most preferred butyl acrylate.

Preferably, said comonomer residue is present in an amount from 1 to 30 wt %, preferably from 5 to 25 wt %, based on the total weight of the copolymer **CP.**

An example of a commercially available copolymer **CP** that comprises vinyl acetate as an additional comonomer residue is LOTADER^{®} AX8670T from Arkema Inc., which is a random ethylene-vinyl acetate-glycidyl methacrylate terpolymer (EVA-GMA). A commercially available copolymer **CP** that comprises butyl acrylate as an additional comonomer residue is LOTADER^{®} 3210 from Arkema Inc., which is a random ethylene-butyl acrylate-maleic anhydride terpolymer. An example of a copolymer **CP** that is commercially available and comprises methyl acrylate as an additional comonomer residue is LOTADER^{®} AX8900 from Arkema Inc., which is a random ethylene-methyl acrylate-glycidyl methacrylate terpolymer.

In case the copolymer **CP** comprises additional comonomer residues, it is especially preferred if said copolymer **CP** contains first comonomers having epoxide functionality as mentioned before, most preferred glycidyl methacrylate.

In case the copolymer **CP** comprises additional comonomer residues, it is especially preferred if said copolymer **CP** consists of ethylene monomer residues, residues of a first comonomer having one or more functionality selected from the group consisting of carboxylic acid and salts thereof, carboxylic acid anhydride and epoxide and said additional comonomer residues.

The one-component thermosetting epoxy resin composition might additionally comprise at least one toughness improver **D.** The toughness improvers **D** may be solid or liquid. More particularly the toughness improver **D** is selected from the group consisting of terminally blocked polyurethane polymers **D1,** liquid rubbers **D2** and core-shell polymers **D3.** With preference the additional toughness improver **D** is selected from the group consisting of terminally blocked polyurethane polymers **D1** and liquid rubbers **D2,** most preferably liquid rubbers **D2.**

Preferred liquid rubbers **D2** are carboxyl group (e.g., carboxylic acid groups) containing acrylonitrile/butadiene rubber **ABR** and reaction products thereof with polyepoxides and/or polyphenols.

Such carboxyl group containing acrylonitrile/butadiene rubbers **ABR** may also include pendant carboxy or carboxyl groups.

The carboxyl group containing acrylonitrile/butadiene rubbers **ABR** preferably have a carboxyl content of 0.005 equivalents per hundred rubbers (EPHR) to 0.4 EPHR, more preferably from 0.01 EPHR to 0.2 EPHR and even more preferably from 0.05 EPHR to 0.1 EPHR.

For the carboxyl group containing acrylonitrile/butadiene rubbers **ABR,** the carboxylic groups are preferably provided by a termonomer such as methacrylic acid. The carboxyl groups containing acrylonitrile/butadiene rubbers **ABR** preferably are acrylonitrile/butadiene/methacrylic acid rubbers.

Particularly preferred carboxyl group containing acrylonitrile/butadiene rubbers **ABR** are available from Nippon Zeon under the trade name Hycar, now available under the trade name NIPOL.

The carboxyl group containing acrylonitrile/butadiene rubbers **ABR** preferably include from 10% - 50% by weight nitrile, more preferably 20% - 40% by weight nitrile and even more preferably 25% - 35% by weight nitrile.

More preferably, the liquid rubbers **D2** are epoxy resin modified acrylonitrile-butadiene copolymers. For example, they can be produced by reacting carboxy- or epoxy-terminated acrylonitrile-butadiene copolymers, also known as liquid rubbers, with polyepoxides and/or polyphenols. Preferably, the at least one epoxy resin modified acrylonitrile-butadiene copolymer is obtained by reacting one or more carboxyl-terminated butadiene-acrylonitrile copolymers (CTBN) with one or more solid epoxy resins of the formula (I) and/or one or more liquid epoxy resin of the formula (I) and/or one or more novolac type epoxy resin.

Suitable epoxy resin modified acrylonitrile-butadiene copolymers are commercially available, for example, under the trade name of Struktol^{®} from Schill & Seilacher Gruppe, Germany, such as Struktol^{®} 3604, Struktol^{®} 3606, Struktol^{®} 3611, Struktol^{®} 3614, Struktol^{®} 3654, and Struktol^{®} 3656. Suitable epoxy resin modified acrylonitrile-butadiene copolymers also include the mixtures of polymers disclosed in US patent 9,796,809 B2 as "impact strength improving agents for epoxy resin compositions".

The fraction of toughness improver **D** is preferably from 1 - 10 wt%, more preferably 2.5 -7.5 wt%, based on the total weight of the epoxy resin composition.

In one preferred embodiment, the one-component thermosetting epoxy resin composition further comprises at least one filler **F.** Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, glass fibres and colour pigments. Particularly preferred are fillers selected from the group consisting of calcium carbonate, calcium oxide, talc, glass fibres, hollow glass beads and fumed silicas, more preferably talc, glass fibres, hollow glass beads, calcium carbonate and fumed silicas.

The total fraction of the overall filler **F** is advantageously 5-50 weight-%, preferably 15-45 weight-%, more preferably 20-40 weight-%, based on the total weight of the epoxy resin composition.

The one-component thermosetting epoxy resin composition may comprise further constituents, especially catalysts, thixotropic agents, plasticizers, solvents, dyes and pigments, corrosion inhibitors, defoamers and adhesion promoters.

The one-component thermosetting epoxy resin composition comprises at least one physical or chemical blowing agent **BA.**

Chemical blowing agents are organic or inorganic substances which, under the influence of temperature, humidity, electromagnetic radiation or chemicals, form or split off gaseous substances. Such substances are in particular azodicarbonamides, sulfohydrazides, hydrogen carbonates or carbonates. Compounds can be used as physical blowing agents which, for example when the temperature, pressure or volume changes, in particular when the temperature rises, change to the gaseous state of matter and thus form a foam structure through volume expansion. Such physical blowing agents are in particular liquids which evaporate at elevated temperature. Furthermore, gases or low-boiling liquids can be used as physical blowing agents, which are introduced into the composition in microencapsulated form. Both chemical and physical blowing agents are able to produce foam structures in polymer compositions.

Preferred physical blowing agents are expandable microspheres, consisting of a thermoplastic shell which is filled with thermally expandable liquids or gases. Such microspheres are commercially available, for example, under the trade name Expancel^{®} from Akzo Nobel, the Netherlands.

The at least one physical or chemical blowing agent **BA** preferably has an activation temperature from 120 °C to 220 ° C., preferably from 140 ° C to 200 ° C.

The proportion of the blowing agent **BA** is advantageously 0.1-5% by weight, preferably 0.1-3% by weight, in particular 1-2% by weight, based on the total weight of the epoxy resin composition.

The one-component thermosetting epoxy resin composition can also contain one or more additives. Preferred additives which can be used are antioxidants, UV stabilizers, dyes, biocides or flame retardants.

The proportion of processing aid is advantageously 1 to 8% by weight, preferably 2 to 5% by weight, based on the total weight of the composition.

The one-component thermosetting epoxy resin composition preferably has a melt flow index (MFI) determined at 110 ° C., 2.16 kg in accordance with ASTM D1238 (2020 Edition), of 0.5-15 g / 10 min, in particular 1-10 g / 10 min, preferably 1-5 g / 10 min, most preferably 1-3 g / 10 min.

The one-component thermosetting epoxy resin composition is preferably an injection moldable mixture, i.e. the mixture has a viscosity suitable for injection molding at the processing temperatures. It is particularly injection-moldable without foaming.

A particularly preferred thermosetting one-component epoxy resin composition comprises:
- 30 - 90 wt%, 35 - 85 wt%, 40 -75 wt%, more preferably 45 - 60 wt%, based on the total weight of the one-component thermosetting epoxy resin composition, of the least one epoxy resin **A** having on average more than one epoxide group per molecule;
- 1 - 10 wt-%, preferably 2 - 5 wt-%, more preferably 2.5 - 4 wt-%, based on the total weight of the one-component thermosetting epoxy resin composition, of at least one copolymer **CP** comprising ethylene monomer residues and residues of a first comonomer having one or more functionalities selected from the group consisting of carboxylic acid and salts thereof, carboxylic acid anhydride and epoxide;

- 0.1 to 15 wt%, more preferably 0.2 to 5 wt%, more particularly 0.5 - 3 wt%, based on the total weight of the one-component thermosetting epoxy resin composition, of the at least one latent hardener for epoxy resins, more particularly dicyandiamide;
- preferably from 1 - 10 wt%, more preferably 2.5 -7.5 wt%, based on the total weight of the one-component thermosetting epoxy resin composition, of at least one toughness improver **D** selected from the group consisting of terminally blocked polyurethane polymers **D1,** liquid rubbers **D2** and core-shell polymers **D3,** preferably liquid rubbers **D2,** more preferably carboxyl group (e.g., carboxylic acid groups) containing acrylonitrile/butadiene rubber **ABR** and reaction products thereof with polyepoxides and/or polyphenols;
- 0.1-5% by weight, preferably 0.1-3% by weight, in particular 1-2% by weight, based on the total weight of the epoxy resin composition, of the blowing agent **BA;**
- preferably 5-50 weight-%, more preferably 15-45 weight-%, most preferably 20-40 weight-%, based on the total weight of the epoxy resin composition, of a filler **F** selected from the group consisting of talc, glass fibres, hollow glass beads, calcium carbonate and fumed silicas.

It may further be advantageous if the preferred one-component thermosetting epoxy resin composition consists to an extent of more than 80 weight%, preferably more than 90 weight%, more particularly more than 95 weight%, especially preferably more than 98 weight%, most preferably more than 99 weight%, based on the total weight of the epoxy resin composition, of the aforementioned constituents.

The one-component thermosetting epoxy resin composition is preferably tack-free at 23 ° C. The term "tack-free" is understood here to mean immediate tack or "tack", which is so low at 23 ° C that when pressed with a thumb with a pressure of about 5 kg for 1 second on the surface of the one-component thermosetting epoxy resin composition, the thumb does not stick to the surface of the composition layer or the one-component thermosetting epoxy resin composition cannot be raised.

The compositions according to the present invention can be obtained by mixing the components in any suitable mixing device, e.g. In a dispersion mixer, planetary mixer, twin screw mixer, continuous mixer, extruder or twin-screw extruder.

After mixing, the resulting composition can be molded into their desired shape e.g. by extruding, blow molding, pelletizing, injection molding, compression molding, stamping or punching or any other suitable method.

The mixing of the components preferably comprises an extrusion step, the mixed and extruded composition then being granulated. The granulated composition is then preferably brought into its desired shape by injection molding.

The foaming of the one-component thermosetting epoxy resin composition is preferably carried out independently of the curing of the epoxy resin composition, in particular beforehand. As a result, the epoxy resin composition cures only when the foaming of the epoxy resin composition has largely taken place. Otherwise, the epoxy resin composition hardens before it has reached the intended place through the foaming. It is therefore preferred that the curing temperature of the epoxy resin composition is above the foaming temperature of the epoxy resin composition.

Preferably, the expandable epoxy resin compositions show the following properties (measurements as described in the experimental section):
- Expansion 30 min @ 175°C: 100% - 300%, preferably 120% - 170%.
- Expansion 30 min @ 160°C: 100% - 300%, preferably 100% - 200%.
- Expansion 30 min @ 200°C: 100% - 300%, preferably 100% - 170%.

If further preferred, if the expandable epoxy resin compositions show the following adhesion and mechanical properties:
- Tensile strength: ≥3 MPa, preferably ≥4 MPa, more preferably ≥5 MPa; and/or, preferably and
- Modulus: ≥400 MPa, preferably ≥500 MPa, more preferably ≥600 MPa; and/or, preferably and
- Elongation at break: 0.5 - 2 %, preferably 0.75 - 1.5 %, more preferably 1 - 1.25 %.

Another aspect of the invention are reinforcement elements comprising the one-component heat-curing epoxy resin composition, in particular for reinforcement in the cavities of structural components.

The one-component thermosetting epoxy resin composition is preferably applied or attached to a carrier part.

This carrier part can consist of any materials. Preferred materials are plastics, in particular polyurethanes, polyamides, polyesters and polyolefins, preferably high-temperature-resistant polymers such as poly (phenylene ethers), polysulfones or polyethersulfones, which in particular are also foamed; Metals, especially aluminum and steel; or any combination of these materials.

Furthermore, the carrier part can have any structure and structure. For example, it can be solid or hollow or have a lattice-like structure. The surface of the carrier part can typically be smooth, rough or structured. The carrier part can also contribute to the structural reinforcement in addition to its function as a carrier for the foamable material.

It is also possible that reinforcing elements have no carrier part and consist entirely of the one-component thermosetting epoxy resin composition.

The reinforcement elements comprising a carrier part and the one-component heat-curing epoxy resin composition are preferably produced by injection molding.

If the carrier part consists of a material that can be processed by injection molding, a two-component injection molding process is usually used. First, a first component, in this case the carrier part, is injected. After this first component has solidified, the cavity in the mold is enlarged or adapted, or the molded part is placed in a new mold, and a second component, in this case the epoxy resin composition, is molded onto the first component with a second injection unit. If the carrier part consists of a material that cannot be produced by the injection molding process, for example of a metal, the carrier part is placed in an appropriate tool and the epoxy resin composition is injection molded onto the carrier part.

Of course, there is also the possibility of fastening the epoxy resin composition to a carrier part by any other fastening means or method.

For the reinforcing elements mentioned, it is further advantageous if the epoxy resin composition can be foamed and cured thermally, at a temperature from 120 °C to 220 ° C., preferably from 140 ° C to 200 ° C, preferably within a time period at said temperature of 10 to 60 min.

Furthermore, the invention comprises the use of a reinforcing element, as described above, for reinforcing cavities in structural components. Structural components of this type are preferably used in bodies and / or frames of means of transport and transportation, in particular of vehicles on water or on land or of aircraft. The invention preferably includes the use of a reinforcing element according to the invention in bodies or frames of automobiles (in particular A, B, C or D pillars) trucks, railroad cars, boats, ships, helicopters and airplanes, mostly preferably in automobiles.

A further aspect of the present invention therefore relates to a method for reinforcing structural components comprising the steps
i) placing the reinforcement element in a cavity according to the previous description;
ii) heating the reinforcement element to a temperature from 120 °C to 220 °C, preferably from 140 °C to 200 °C, preferably for 10 to 60 min.

Preferably, step i) takes place before step ii).

Hence another aspect of the present invention is the use of an copolymer **CP** comprising ethylene monomer residues and residues of a first comonomer having one or more functionalities selected from the group consisting of carboxylic acid and salts thereof, carboxylic acid anhydride and epoxide as mentioned before for decreasing the VOC emission of a one-component thermosetting epoxy resin composition, after curing the one-component thermosetting epoxy resin composition at a temperature in the range from 160 to 200°C, preferably 180 to 200°C, most preferably 200°C, for 30 min.

Preferably the copolymer **CP** has the preferred features and/or ratios as mentioned before and is contained in the one-component thermosetting epoxy resin composition in the preferred amounts as mentioned before.

The reduction in VOC emission is compared to a one-component thermosetting epoxy resin composition mentioned above without the feature d) at least one copolymer **CP** but containing a dispersion aid instead, preferably selected from hydrocarbon resins and ethylene homopolymers, preferably ethylene homopolymers. Preferably the reduction in VOC emission is judged by the VDA 278 norm, more preferably as described in the experimental part.

The invention is elucidated further in the text below by means of examples which, however, are not intended to restrict the invention in any way.

### Examples

Raw materials and test methods used for the testing of the respective properties in the examples were as follows:

| | |
|---|---|
| Solid epoxy resin | Solid epoxy resin, (bisphenol A diglycidyl ether based), Dow |
| CTBN-epoxy resin adduct | Reaction product of CTBN (carboxyl-terminated poly (butadiene-co-acrylonitrile)) with bisphenol A epoxy resin |
| Glass fibers | Chopped glass fibers, Lanxess |
| Filler mixture | Mixture of fumed silica, talc (Clay mineral composed of hydrated magnesium silicate), glass hollow spheres (3M Glassbubbles iM16K) and calcium carbonate |
| EH 1 | Luwax AL3, ethylene homopolymer, DSC peak melting point (ASTM D-3418, DIN 51007): 102-108°C, BTC Europe |
| EH 2 | Marcus Wax M200, ethylene homopolymer, DSC peak melting point (ASTM D-3418): 116°C, Marcus Oil |
| IP 1 | Lotader^{™} AX 8840, epoxy-functionalized polyethylene (poly(ethylene-co-glycidyl methacrylate) random copolymer), glycidyl methacrylate content (FTIR): 8 wt.-%, Melt Index (190°C/2.16kg, ISO 1133 / ASTM D1238): 5 g/10min, Melting Point (ISO 11357-3): 104 °C, Arkema Inc. |
| IP 2 | Surlyn 1802, ionomer of ethylene acid copolymer, Melt Index (190°C/2.16kg, ISO 1133 / ASTM D1238): 4.3 g/10min, Melting Point (ASTM D3417): 99 °C, DOW. |
| IP 3 | Nucrel 3990, copolymer of ethylene and acrylic acid, acrylic acid content (FTIR): 9.5 wt.-%, Melt Index (190°C/2.16kg, ISO 1133 / ASTM D1238): 10 g/10min, Melting Point (ASTM D3418): 97 °C, DOW. |
| IP 4 | Lotader AX8670T, random ethylene-vinyl acetate-glycidyl methacrylate terpolymer, |
| | Vinyl Acetate Content (FTIR): 17 wt-%, Glycidyl Methacrylate Content (FTIR): 9 wt-%, Melt Index (190°C/2.16kg, ISO 1133 / ASTM D1238): 12 g/10min, Melting Point (ISO 11357-3): 87 °C, Arkema |
| IP 5 | Lotader AX 8900, random ethylene-methyl acrylate-glycidyl methacrylate terpolymer, Methyl Acrylate Content (FTIR): 24 wt-%, Glycidyl Methacrylate Content (FTIR): 8 wt-%, Melt Index (190°C/2.16kg, ISO 1133 / ASTM D1238): 6 g/10min, Melting Point (ISO 11357-3): 65 °C, Arkema |
| Dicy | Dicyandiamide |
| Substituted urea | Accelerator |
| Blowing agent | Chemical blowing agent, azodicarbonamide (ADCA) |
| Activator | Blowing agent activator |

| | |
|---|---|
| Raw materials used | |

### Preparation of the compositions

According to the information in Table 1 and 2, the reference compositions Ref.1-Ref. 3 and the compositions Ex.1-Ex.5 according to the invention were produced. The amounts of the basic formulation shown in Table 1 are in parts by weight. For the compositions Ref.1-Ref. 3 and the compositions Ex.1-Ex.5 as shown in table 2, the basic formulation in Table 1 was used as a basis and the amount of EH1-EH2, or IP1-IP5 respectively, as indicated was added by removing the same amount of filler mixture from the basic formulation in Table 1. For example, in the final formulation Ex.1, 3 wt.-% of IP1 was used, based on the total weight of formulation Ex.1, and 21.1 wt.-% of filler mixture was used, based on the total weight of formulation Ex.1. For Ref.1, the unchanged basic formulation from table 1 was used.

The raw materials used were mixed with a tumble mixer for 10 min. The mixtures were then introduced into a twin-screw extruder (Dr. Collin ZK 25 T SCD15) and compounded at a throughput of 2.5 kg per hour. The discharge took place through a 1-hole nozzle (3mm) on a conveyor belt. The strand obtained was cooled with forced air and then granulated using the Dr.Collin granulator integrated in the system. The granules obtained were then processed into 3 mm thick sheets using a Krauss-Maffei 110t injection molding machine.

Test methods used for the testing of the respective properties in the examples were as follows:

### Determination of foam density / volume expansion ("Expansion")

The expansion stability was tested in all samples by heat treatment of the individual samples for 30 min in an oven at the indicated temperature as shown in table 2 (object temperature, 160 °C, 175 °C or 200 °C).

Volume expansions were quantified for each sample by measuring the density before and after expansion. The densities were determined according to DIN EN ISO 1183 using the water immersion method (Archimedes principle) in deionized water and a precision balance to measure the mass. The results are shown in table 2.

### Adhesion test ("Adhesion")

Cleaned and then oiled test specimens of steel (thickness 0.8 mm) were bonded with a piece of material of 50 × 50 × 3 mm and using 5 mm Teflon spacers and cured in a fixture to maintain the 5 mm cured material thickness. The curing conditions were 30 min at 175°C object temperature. The specimens were separated by hand.

The following visual assessment of the fracture appearance obtained was used: The results were divided into CF (cohesive fracture) and AF (adhesive fracture) and the amount of the mentioned fracture was determined in % of the total fracture pattern and shown in table 2.

### VOC/FOG measurements ("VOC", "FOG")

### VDA 278

The VDA 278 norm describes an analytical method to determine emissions from parts or adhesives that are used in motor vehicles. The method comprises a thermodesorption step (emission of volatile substances by heating up small amounts of test materials according to a defined process), a cryofocus step (immobilization of volatile substances in a cold trap) and a quick heating step to 280°C to evaporate the volatile substances. The volatiles are then split up by gas-chromatographic separation and single substances are detected by mass spectrometry.

In this method, two semi-quantitative cumulative values are determined, a VOC value (total of readily volatile to medium volatile substances calculated as toluene equivalents up to n-pentacosane, C25) and a FOG value (low volatility substances calculated as hexadecane equivalents, in the boiling range up to C14 to C32 n-alcanes, readily condensing at room temperature). To determine the VOC value the sample is heated up to 90°C for 30 min. The FOG value is determined by re-heating the sample used for generating the VOC value to 120° for 60 min. The VDA 278 norm does not define acceptable limits for VOC and FOG values.

Preferred values are below 0.5 mg/g, more preferred below 0.1 mg/g, even more preferred below 0.05 mg/g for VOC and 2 mg/g, more preferred below 0.1 mg/g, even more preferred below 0.05 mg/g, for FOG.

**Table 1**

| **Basic formulation** | [wt-%] |
|---|---|
| Solid epoxy resin | 55 |
| CTBN-epoxy resin adduct | 5 |
| Glass fibres | 13 |
| Filler mixture | 24.1 |
| Dicy | 1.5 |
| Substituted urea | 0.3 |
| Blowing agent | 1.0 |
| Activator | 0.1 |
| **TOTAL** | 100 |

**Table 2**

| | **Addition** | **Wt.-%** | **Expansion 175°C, 30 min** | **Adhesion** | **Expansion 160°C, 30 min** | **Expansion 200°C, 30 min** | **Emission after curing 30 min @ 160°C** | | **Emission after curing 30 min @ 200°C** | |
|---|---|---|---|---|---|---|---|---|---|---|
| | | | | | | | VOC (ppm) | FOG (ppm) | VOC (ppm) | FOG (ppm) |
| Ref.1 | none | 0% | 153% | 90% CF | 198% | 211% | **14** | **8** | **0** | **7** |
| Ref.2 | EH 1 | 3% | 151% | 90% CF | 187% | 207% | **264** | **636** | **88** | **758** |
| Ref.3 | EH 2 | 3% | 136% | 90% CF | 194% | 255% | **80** | **212** | **26** | **239** |
| Ex.1 | IP 1 | 3% | 162% | 90% CF | 181% | 150% | **11** | **10** | **2** | **is** |
| Ex.2 | IP2 | 3% | 142% | 90% CF | 203% | 102% | **2** | **7** | **<1** | **6** |
| Ex.3 | IP 3 | 3% | 127% | 90% CF | 89% | 98% | **30** | **7** | **21** | **2** |
| Ex.4 | IP 4 | 3% | 147% | 100% CF | 170% | 179% | **21** | **3** | **3** | **4** |
| Ex.5 | IP 5 | 3% | 153% | 90% CF | 156% | 172% | **39** | **3** | **3** | **4** |

## Claims

1. One-component thermosetting epoxy resin composition, comprising
a) at least one epoxy resin **A** having on average more than one epoxide group per molecule;
b) at least one latent hardener for epoxy resins; and
c) at least one physical or chemical blowing agent **BA**; and
d) at least one copolymer **CP** comprising ethylene monomer residues and residues of a first comonomer having one or more functionalities selected from the group consisting of carboxylic acid and salts thereof, carboxylic acid anhydride and epoxide, wherein the at least one copolymer **CP** is contained in an amount from 1-10 wt-%, preferably 2 - 5 wt-%, more preferably 2.5 - 4 wt-%, based on the total weight of the one-component thermosetting epoxy resin composition.

2. One-component thermosetting epoxy resin composition according to Claim 1, wherein the fraction of the epoxy resin **A** having on average more than one epoxide group per molecule is from 30 - 90 wt%, 35 - 85 wt%, 40 -75 wt%, more preferably 45 - 60 wt%, based on the total weight of the one-component thermosetting epoxy resin composition.

3. One-component thermosetting epoxy resin composition according to any of the preceding claims, wherein the epoxy resin **A** is a solid epoxy resin, preferably the epoxy resin **A** has the formula (I) 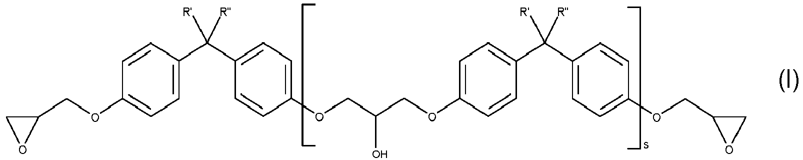 wherein the substituents R' and R" independently of one another are either H or CH₃ and the index s has a value of > 1.5, more particularly from 2 to 12.

4. One-component thermosetting epoxy resin composition according to any of the preceding claims, wherein the at least one copolymer **CP** has a melt flow index ("MFI") in the range of from 2 to 20 g / 10 min, preferably from 4 to 10 g / 10 min, as determined according to ASTM D-1238 (2020 Edition, 190°C/2.16 kg).

5. One-component thermosetting epoxy resin composition according to any of the preceding claims, wherein the at least one copolymer **CP** has a melting point in the range from 60°C - 120°C, preferably from 85°C - 110°C, as determined according to ISO 11357-3:2018. Temperatures of less than 60°C are disadvantageous with respect to increased tackiness of the uncured thermosetting epoxy resin composition.

6. One-component thermosetting epoxy resin composition according to any of the preceding claims, wherein in the at least one copolymer **CP** the first comonomer has carboxylic acid functionality, wherein said first comonomer is preferably selected from the group consisting of acrylic acid and methacrylic acid, preferably methacrylic acid.

7. One-component thermosetting epoxy resin composition according to any of the preceding claims, wherein in the at least one copolymer **CP** the first comonomer has epoxide functionality, wherein said first comonomer are preferably glycidyl esters of carboxylic acids, more preferably esters of acrylic acid or methacrylic acid, even more preferably selected from the list consisting of glycidyl acrylate, glycidyl methacrylate and allyl glycidyl ether, most preferred glycidyl methacrylate.

8. One-component thermosetting epoxy resin composition according to any of the preceding claims, wherein the copolymer **CP** consists of ethylene monomer residues and residues of a first comonomer having one or more functionality selected from the group consisting of carboxylic acid and salts thereof, carboxylic acid anhydride and epoxide. Most preferred, the copolymer **CP** consists of ethylene monomer residues and residues of a first comonomer selected from the group consisting of methacrylic acid and glycidyl methacrylate.

9. One-component thermosetting epoxy resin composition according to any of the claims 1 - 7, wherein the at least one copolymer **CP** comprises additional comonomer residues selected from the group consisting of unsaturated esters and acetates, more preferably selected from methyl acrylate, ethyl acrylate, butyl acrylate, and vinyl acetate, most preferred butyl acrylate.

10. One-component thermosetting epoxy resin composition according to any of the preceding claims, wherein the one-component thermosetting epoxy resin composition further comprises at least one toughness improver **D** selected from the group consisting of terminally blocked polyurethane polymers **D1,** liquid rubbers **D2** and core-shell polymers **D3,** preferably liquid rubbers **D2,** more preferably carboxyl group (e.g., carboxylic acid groups) containing acrylonitrile/butadiene rubber **ABR** and reaction products thereof with polyepoxides and/or polyphenols, wherein the fraction of the toughness improver **D** is preferably from 1 - 10 wt%, more preferably 2.5 -7.5 wt%, based on the total weight of the one-component thermosetting epoxy resin composition.

11. One-component thermosetting epoxy resin composition according to any of the preceding claims, wherein the latent hardener is selected from dicyandiamide, guanamines, guanidines, aminoguanidines and derivatives thereof, substituted ureas, imidazoles and amine complexes, preferably dicyandiamide.

12. One-component thermosetting epoxy resin composition according to any of the preceding claims, wherein the one-component thermosetting epoxy resin composition further comprises at least one filler **F,** selected from the group consisting of calcium carbonate, calcium oxide, talc, glass fibres and fumed silicas, more preferably talc, glass fibres and fumed silicas.

13. One-component thermosetting epoxy resin composition according to any of the preceding claims, wherein the proportion of the blowing agent **BA** is 0.1-5% by weight, preferably 0.1-3% by weight, in particular 1-2% by weight, based on the total weight of the epoxy resin composition

14. One-component thermosetting epoxy resin composition according to any of the preceding claims, wherein the one-component thermosetting epoxy resin composition has a melt flow index (MFI) of 0.5-15 g / 10 min, in particular 1-10 g / 10 min, preferably 1-5 g / 10 min, most preferably 1-3 g / 10 min, determined at 110 ° C., 2.16 kg in accordance with ASTM D1238 (2020 Edition).

15. A reinforcement element comprising the one-component heat-curing epoxy resin composition according to claims 1 - 14, in particular for reinforcement in the cavities of structural components, preferably in bodies and / or frames of means of transport and transportation.

16. A method for reinforcing structural components comprising the steps
i) placing a reinforcement element according to claim 15 in a cavity of a structural component, preferably in bodies and / or frames of means of transport and transportation;
ii) heating the reinforcement element to a temperature from 120 °C to 220 °C, preferably from 140 °C to 200 °C, preferably for 10 to 60 min.

17. Use of a copolymer **CP** comprising ethylene monomer residues and residues of a first comonomer having one or more functionalities selected from the group consisting of carboxylic acid and salts thereof, carboxylic acid anhydride and epoxide, preferably as described as copolymer **CP** in any of the claims 4 - 9, for decreasing the VOC emission of a one-component thermosetting epoxy resin composition, after curing the one-component thermosetting epoxy resin composition at a temperature in the range from 160 to 200°C, preferably 180 to 200°C, most preferably 200°C, for 30 min, whereby the reduction in VOC emission is preferably measured according to the VDA 278 norm, more preferably as described in the experimental part.
